# EUROPÄISCHE PATENTSCHRIFT

(11) **EP 0 617 221 B1**
(45) Veröffentlichungstag und Bekanntmachung des Hinweises auf die Patenterteilung: **20.12.1995**
(21) Anmeldenummer: 93117652.3
(22) Anmeldetag: 30.10.1993
(51) Int. Cl.: F16L 21/06, F16L 27/04

(54) **Rohrverbindung**
Pipe coupling
Raccord pour tuyaux

(30) Priorität: 23.03.1993 DE 9304292 U
(43) Veröffentlichungstag der Anmeldung: 28.09.1994
(73) Patentinhaber: Vahlbrauk, Karl Heinz, D-37581 Bad Gandersheim (DE)
(72) Erfinder: Vahlbrauk, Karl Heinz, D-37581 Bad Gandersheim (DE)
(74) Vertreter: Sobisch, Peter, Dipl.-Ing.

(56) Entgegenhaltungen:
- DE-A- 3 246 327
- DE-U- 9 113 612
- DE-U- 9 215 544
- DE-U- 9 308 116
- US-A- 2 175 712
- US-A- 2 412 394

## Beschreibung

Die Erfindung bezieht sich auf eine Rohrverbindung entsprechend dem Oberbegriff des Anspruchs 1.

Rohrverbindungen, deren zu verbindende Rohrenden teilweise mit muffenartigen Aufweitungen versehen sind, sind in mannigfacher Form bekannt. So zeigt beispielsweise das DE-GM 91 13 612.1 eine solche Rohrverbindung, bei der die Enden der zu verbindenden Rohre mit untereinander gleichen muffenartigen Aufweitungen versehen sind. Jede dieser Aufweitungen ist - ausgehend von dem unaufgeweiteten Bereich - durch einen zylindrischen Abschnitt gekennzeichnet, an den sich ein bis zum stirnseitigen Ende erstreckender kelchartiger aufgeweiteter Abschnitt anschließt, wobei im Bereich des stirnseitigen Endes der letztgenannte Abschnitt im wesentlichen bis auf das radiale Niveau des zylindrischen Abschnitts eingezogen ist. Die einander axial gegenüberstehenden kelchartig aufgeweiteten Abschnitte werden durch eine im Durchmesser verringerbare Sicherungsschelle bzw. Spannhülse übergriffen, welche eine Auszugssicherung bildet. Dabei kann in einem mittleren Bereich zwischen der Innenseite der Spannhülse und den zugekehrten Außenseitenabschnitten der kelchartig aufgeweiteten Abschnitte ein Druckring vorgesehen sein, der an die Konturen der aufgeweiteten Abschnitte angepaßt ist. Innerhalb der muffenartigen Aufweitungen der beiden Rohrenden, und zwar die genannten zylindrischen Abschnitte gleichermaßen überbrückend befindet sich ein Stützrohr, dessen Innenradius im wesentlichen dem Innenradius der unaufgeweiteten Rohrabschnitte entspricht. Die kelchartigen Aufweitungen dienen der Aufnahme von Dichtungselementen. Wesensmerkmal dieser Rohrverbindung ist, daß aufgrund der relativ lang ausgebildeten muffenartigen Aufweitungen, insbesondere deren Unterteilung in einen zylindrischen und einen kelchartig aufgeweiteten Abschnitt sowie die dementsprechend große Länge des inneren Stützrohres bei der Montage relativ umfangreiche axiale Verschiebebewegungen der zu verbindenden Rohre erforderlich sind.

Aus dem DE GM 92 15 544.8 ist eine Steckmuffenverbindung zwischen zwei Rohrenden, hier zwei aus Kunststoff bestehenden Abwasserrohrenden bekannt, deren eines als Einsteckteil und deren anderes als Muffenteil ausgebildet ist, wobei ein aus einem elastomeren Werkstoff, z.B. Gummi bestehendes Dichtungselement vorgesehen ist, welches sich im wesentlichen über die gesamte Einstecklänge des Einsteckteils erstreckt und darüber hinaus an seinem, dem Muffenspiegel zugewandten Ende einen nach innen vorspringenden Ansatz aufweist, dessen Innendurchmesser im wesentlichen dem Innendurchmesser des Einsteckteils entspricht. Eine solche Ausbildung des Dichtungselements dient gleichzeitig der Verhinderung einer Schallübertragung zwischen den Rohrenden. Eine axiale Auszugssicherung ist bei dieser Rohrverbindung jedoch nicht gegeben.

Aus der US-PS 2 175 712 ist eine Rohrverbindung zwischen zwei, endseitig gleich ausgebildeten, d.h. muffenartig erweiterten Rohrenden bekannt, wobei die Rohrenden mittels einer schraubenbetätigbaren Spannschelle, welche die Rohrenden formschlüssig umgreift und diese dahingehend fixiert, daß zwischen deren Stirnseiten ein Abstand verbleibt. Die muffenartigen Aufweitungen und die, diesen außenseitig zugekehrten Seiten der Spannschelle bilden jeweils Teile von Kugelflächen. Im unmittelbaren Rohrverbindungsbereich ergeben sich bei dieser bekannten Rohrverbindung jedoch Querschnittsunstetigkeiten.

Aus der DE 32 46 327 C2 ist eine Verbindung zwischen zwei Rohrenden bekannt, die untereinander gleich beschaffene muffenartige Aufweitungen aufweisen. Jede Aufweitung besteht ausgehend von einem unaufgeweiteten Rohrabschnitt aus einem zylindrischen und einem gegenüber diesem weiter aufgeweiteten tulpenartigen Abschnitt, dessen stirnseitiges Ende jedoch radial lediglich bis auf das Niveau des zylindrischen Abschnitts eingezogen ist. Zwischen den Stirnseiten dieser Rohrenden erstreckt sich ein außenseitig wellenartig profiliertes Verriegelungsrohr, wobei zwei, jeweils die tulpenartigen Aufweitungen einerseits und einen ähnlich gestalteten Abschnitt des Verriegelungsrohres andererseits überbrückende schraubenbetätigte Spannhülsen vorgesehen sind. Der gesamte Rohrverbindungsbereich ausgehend von den unaufgeweiteten Abschnitten der zu kuppelnden Rohrenden wird innenseitig durch ein Führungsrohr überbrückt, welches über manschettenartige Abschlußelemente jeweils im Muffengrund der genannten Aufweitungen abgestützt ist. Innerhalb des, durch die tulpenartigen Aufweitungen einerseits und das Führungsrohr andererseits umgrenzten Ringraumes befindet sich jeweils ein Dichtelement, wobei ein weiteres Dichtelement im Bereich sickenartiger mittlerer Einformungen der Spannhülsen - innenseitig an dem Führungsrohr anliegend - angeordnet ist. Eine derartige, aus verhältnismäßig vielen Einzelteilen zusammengesetzte Rohrverbindung ist mit einem beträchtlichen Raumbedarf während der Montage verbunden.

Es ist die Aufgabe der Erfindung, eine Rohrverbindung der eingangs bezeichneten Gattung dahingehend auszugestalten, daß diese insbesondere auch unter räumlich beengten Verhältnissen, beispielsweise bei Altbausanierungen, Änderungsarbeiten an bestehenden Installationssystemen usw. leicht handhabbar ist und gleichzeitig bei einwandfreier Dichtungswirkung in axialer Richtung fixiert ist. Gelöst ist diese Aufgabe bei einer gattungsgemäßen Rohrverbindung durch die Merkmale des Kennzeichnungsteils des Anspruchs 1.

Erfindungswesentlich ist hiernach, daß gegenüber dem eingangs dargelegten Stand der Technik die axiale Erstreckung der muffenartigen Aufweitungen erheblich vermindert worden ist, da auf den zylindrischen Abschnitt dieser Aufweitungen verzichtet worden ist. Dies bedeutet, daß nahezu der gesamte, durch die Innenkontur des Muffenabschnitts einerseits und die Außenkontur des Stützrohres andererseits umgrenzte Raum für die Aufnahme eines Dichtungselements zur Verfügung steht, wobei die axiale Ausdehnung dieses Raumes verhältnismäßig kurz gehalten werden kann. Auf diese Weise wird die Handhabbarkeit der Rohrverbindung auch unter räumlich beengten Verhältnissen verbessert, da das Ausmaß der zur Montage erforderlichen Verschiebewegungen erheblich verkürzt worden ist. Die Rohre bestehen vorzugsweise aus Stahl und können mit üblichen Korrosionsschutzsystemen ausgerüstet sein. Die Dichtungselemente bestehen vorzugsweise aus einem elastomeren Werkstoff. Zur axialen Auszugsicherung ist eine Sicherungsschelle oder Spannhülse vorgesehen, die im Durchmesser reduzierbar ist und zum formschlüssigen Übergreifen der Muffenabschnitte bestimmt ist. Vorzugsweise handelt es sich um eine zweischalige Sicherungsschelle, und zwar aus Gründen der einfacheren Montierbarkeit. Durch die Spannhülse ist das einzelne Rohrelement axial in beiden Richtungen fixiert. Dies bedeutet, daß auch innerhalb der montierten Rohrverbindung die axiale Position der beiden Rohrenden durch die Wirkung Spannhülse axial fixiert ist. Es ist zu diesem Zweck die Spannhülse, die den Rohrverbindungsbereich vorzugsweise axial symmetrisch übergreift in einem mittleren Bereich mit einer sickenartigen Einformung ausgerüstet, wobei die Innenkonturen der Spannhülse an diejenigen der beiden Muffenabschnitte angepaßt sind. Auf diese Weise ist über die Schraubenbetätigung der Spannhülse eine großflächige Druckübertragung möglich, welche über die zwischen dem Stützrohr und den Muffenabschnitten angeordneten Dichtungselemente eine einwandfreie Dichtungswirkung entwickelt. Die Muffenabschnitte sind somit durch die Spannhülse axial unter einem festen Abstand gehalten. Auf diese Weise wird die Verwendbarkeit beliebiger Korrosionsschutzsysteme erleichtert, welche im weitesten Sinne auf Oberflächenbehandlungen, Oberflächenbeschichtungen usw. beruhen. Diese Korrosionsschutzsysteme werden jedenfalls durch ein stirnseitiges Aneinanderstoßen der Rohrenden nicht gefährdet.

Die Merkmale des Anspruchs 2 bringen den Vorteil mit sich, daß eine Schallentkopplung der zu verbindenden Rohrenden erreicht wird.

Man erkennt, daß die erfindungsgemäße Rohrverbindung ferner aufgrund der Dimensionierung des Stützrohres einen innenseitig auch im Verbindungsbereich glatten Rohrwandungsverlauf aufweist, wodurch dem Auftreten von Strömungsgeräuschen entgegengewirkt wird. Sowohl die Festigkeitseigenschaften gegenüber einem axialen Auseinanderziehen als auch die Dichtungseigenschaften sind aufgrund des symmetrisch ausgebildeten Rohrverbindungsaufbaus unabhängig von der Richtung des innerhalb der Rohre strömenden Mediums.

Die Erfindung wird im folgenden unter Bezugnahme auf das zeichnerisch dargestellte Ausführungsbeispiel näher erläutert werden.

Mit 1, 2 sind in der Zeichnungsfigur zwei, erfindungsgemäß miteinander verbundene Rohrenden zweier Rohre 3, 4 bezeichnet, die an ihren beiden stirnseitigen Enden kelchartige Muffenabschnitte 5, 6 aufweisen. Die Aufweitung erfolgt ausgehend von dem unaufgeweiteten Teil der Rohre 3, 4 über einen Bereich größter Aufweitung bis zu einem, das stirnseitige Ende bildenden, radial eingezogenen Bereich, welcher sich nahezu bis auf das radiale Niveau der Außenseite des unaufgeweiteten Bereichs erstrecken kann. Es kommt auch eine andere geometrische Form des Muffenabschnitts in Betracht, der ausgehend von dem unaufgeweiteten Bereich über eine Aufweitung bis zu einem stirnseitig befindlichen, radial eingezogenen Bereich geführt. Mit 7 ist ein Stützrohr bezeichnet, dessen Länge im Verbindungsbereich der Rohre 3, 4 die Längen der beiden Muffenabschnitte 5, 6 innenseitig im wesentlichen vollständig überbrückt und welches radiale Innenabmessungen sowie Wandstärken aufweist, die denjenigen der unaufgeweiteten Teile der Rohre 3, 4 entsprechen.

Der durch die Außenseite des Stützrohrs 7 und die Innenseite der beiden Muffenabschnitte 5, 6 radial umgrenzte Raum ist jeweils vollständig durch erst eingesetzte, beispielsweise aus einem elastomeren Kunststoff bestehende, untereinander gleiche Dichtungselemente 8, 9 ausgefüllt. Diese Dichtungselemente sind aufgrund der besonderen Gestaltung der kelchartig ausgebildeten Muffenabschnitte 5, 6 auch bei Druckbeaufschlagung an einem axialen Auswandern gehindert und somit zuverlässig festgelegt.

Mit 10 ist eine Spannmuffe bzw. Sicherungsschelle bezeichnet, die über eine Schraubenbetätigung im Durchmesser verringerbar ist und ein- oder zweischalig ausgebildet sein kann. Die Spannhülse 10 erstreckt sich im montierten Zustand der Rohrverbindung symmetrisch beiderseits einer Mittelebene 11, und zwar über beide Muffenabschnitte 5, 6. Sie erstreckt sich insbesondere über die Bereiche größter Aufweitung der beiden Muffenabschnitte 5, 6 hinaus und bis in die Nähe des unaufgeweiteten Bereichs der beiden Rohre 3, 4 heran. Wesentlich ist, daß die Spannhülse 10 zumindest von ihren Innenkonturen her den Außenkonturen der beiden Muffenabschnitte 5, 6 angepaßt ist. Auf diese Weise ergibt sich die Möglichkeit einer gleichförmigen, großflächig wirkenden Druckübertragung im Falle einer Durchmesserverringerung.

Wesentlich ist ferner, daß die Spannhülse im Bereich der Mittelebene 11 mit einer sickenartigen Einformung 12 versehen ist, welche von ihren Innenkonturen her wiederum an die Außenkonturen der Muffenabschnitte 5, 6 angepaßt ist, so daß diese Muffenabschnitte 5, 6 axial beidseitig fixiert sind. Man erkennt, daß durch Druckausübung mittels der Schraubenbetätigung der Spannhülse 10 die Dichtungselemente 8, 9 zwischen den Außenseiten des Stützrohres 7 und den Innenseiten der Muffenabschnitte 5, 6 verpreßt werden und eine zuverlässige Dichtungswirkung entwickeln. Gleichzeitig ergibt sich aufgrund des Formschlusses zwischen der Spannhülse 10 und den Muffenabschnitten 5, 6 eine zuverlässige axiale Fixierung der Rohre 3, 4.

In Abwandlung des zeichnerisch dargestellten Prinzips können zwischen den Innenseiten der Spannhülse 10 und den Außenseiten der Muffenabschnitte 5, 6 Packungen aus Gummi oder einem vergleichbaren elastomeren Werkstoff oder einem sonstigen Kunststoff vorgesehen sein, wodurch die Schallübertragung zwischen den Rohren 3, 4 gedämpft wird. Gleichzeitig kann auf diese Weise zur weiteren Vergleichmäßigung der Druckübertragung zwischen der Spannhülse 10 und den Muffenabschnitten 5, 6 beigetragen werden.

Man erkennt ferner, daß aufgrund der genauen Fixierung der Rohrenden 1, 2 aufgrund der formschlüssigen Wirkung der Spannhülse 10 beliebige Korrosionsschutzsysteme bei den Rohren 3, 4 Verwendung finden können, da Oberflächenbeschichtungen jedenfalls durch zusammenstoßende Rohrenden bzw. Einsteckenden nicht gefährdet werden. Es ist ferner das Stützrohr 7, durch welches sich im Rohrverbindungsbereich ein glatter Innenwandungsverlauf ergibt, stirnseitig mit Abstand zu den unaufgeweiteten Bereichen der Rohrenden 3, 4 gehalten, so daß auch hier keine Korrosionsrisiken entstehen.

Aufgrund des völlig symmetrischen Aufbaus der Rohrverbindung bezüglich der Mittelebene 11 sind die Eigenschaften der Rohrverbindung, soweit die Dichtwirkung, jedoch auch die axiale Auszugssicherung betroffen sind, unabhängig von der Strömungsrichtung des innerhalb der Rohre 3, 4 strömenden Mediums.

Aufgrund der Fixierungswirkung der Spannhülse 10 werden insbesondere bei interner Druckbeaufschlagung die, Dichtungskragen bildenden Enden der Muffenabschnitte 5, 6 in ihrer Position zuverlässig gehalten, so daß auch in diesen Fällen eine Dichtungswirkung sichergestellt ist.

Man erkennt ferner, daß aufgrund der vergleichsweise kurz ausgebildeten Muffenaufweitungen 5, 6 die Einschubstrecke für das Stützrohr 7 ebenfalls vergleichsweise kurz ausfällt, so daß sich unter Verwendung dieser Rohrverbindungen Radialmontagen zumindest angenähert realisieren lassen.

Es können Rohrverbindungen der gezeigten Art auch bei solchen Rohren Verwendung finden, die lediglich an einem Ende muffenartige Aufweitungen aufweisen, an ihrem anderen Ende hingegen als Einsteckenden ausgebildet sind, welche in sonstiger Weise mit Anschlußrohrelementen zu verbinden sind. Es sind diese erfindungsgemäßen Rohrverbindungen insbesondere zur Verwendung bei Umrüstungen der Installation von Altbauten, nachträglichen Änderungen der Rohrleitungen, insbesondere in häufig sehr knapp bemessenen Installationsschächten der Ver- und Entsorgung von Gebäuden, bei denen unter räumlich extrem beengten Verhältnissen gearbeitet werden muß, bestimmt.

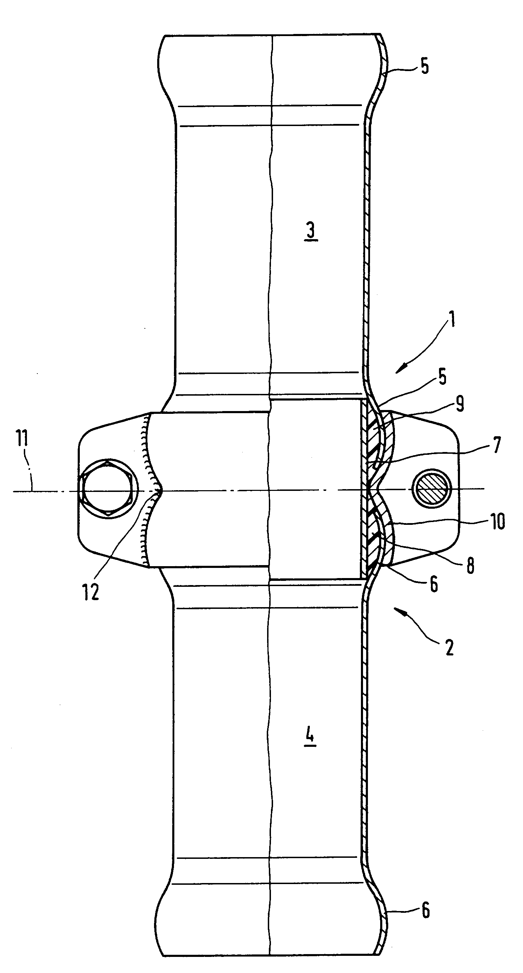

## Patentansprüche

1. Rohrverbindung umfassend zwei Rohrenden (1,2), die stirnseitig mit Muffenabschnitten (5,6) versehen sind, in die Dichtungselemente (8,9) eingesetzt sind, wobei sich die Muffenabschnitte (5,6) über einen Bereich größter Aufweitung bis zu einem, das stirnseitige Ende bildenden Bereich erstrecken, wobei eine ein- oder zweischalige, schraubenbetätigte, im Durchmesser verringerbare Spannhülse (10), die zum formschlüssigen Übergreifen der einander axial gegenüberliegenden Muffenabschnitte (5,6) bestimmt und ausgestaltet ist, angeordnet ist und wobei ein, dem Verbindungsbereich der Rohrenden (1,2) überbrückendes Stützrohr (7) vorgesehen ist, dessen Innenradius im wesentlichen dem Innenradius der unaufgeweiteten Bereiche der Rohrenden (1,2) entspricht, wobei sich die Muffenabschnitte (5,6) an beiden Enden im wesentlichen bis auf das radiale Niveau der Außenseiten unaufgeweiteten Bereiche der Rohrenden (1,2) erstrecken,
dadurch gekennzeichnet,
- daß sich die Dichtungselemente (8,9) aufnehmenden Muffenabschnitte (5,6) von dem unaufgeweiteteten Bereich der Rohrenden (1,2) aus erstrecken,
- daß die Dichtungselemente (8,9) jeweils den gesamten, durch die Innenkontur des Muffenabschnitts (5,6) einerseits und die Außenkontur des Stützrohres (7) andererseits umgrenzten Raum einnehmen,
- daß sich die Dichtungselemente (8,9) axial bis an die Stirnseiten des Stützrohres (7), nämlich bis zu den unaufgeweiteten Bereichen der Rohrenden (1,2) erstrecken,
- daß die Spannhülse (10) an ihrem axial mittleren Bereich eine sickenartige Einformung (12) aufweist,
- daß die Innenkonturen der Spannhülse (10) an die Außenkonturen der Muffenabschnitte (5,6) angepaßt sind und
- daß die einander axial gegenüberstehenden Muffenabschnitte (5,6) mittels der Spannhülse (10) axial unter einem Abstand zueinander gehalten sind.

2. Rohrverbindungen nach Anspruch 1,
dadurch gekennzeichnet,
- daß zwischen den Außenkonturen der Muffenabschnitte (5,6) einerseits und den Innenkonturen der Spannhülse (10) andererseits eine Packungszwischenlage aus Gummi oder einem sonstigen Kunststoff, zum Beispiel einem elastomeren Werkstoff angeordnet ist.

## Claims

1. Pipe coupling embracing two pipe ends (1,2) which are provided at their ends with socket sections (5,6) in which sealing elements (8,9) are set, wherein the socket sections (5,6) extend over a region of maximum enlargement to a region forming the pipe end face, wherein a single-shell or double-shell clamping sleeve (10) actuated by screwing and reducible in diameter is provided which is sized and shaped for shape-locking engagement over the socket sections (5,6) which lie axially opposed to each other, and wherein a support tube (7) is provided bridging the connecting region of the pipe ends (1,2), the internal radius of the support tube corresponding substantially to the internal radius of the unenlarged regions of the pipe ends (1,2), wherein the socket sections (5,6) extend at both ends substantially to the radial dimension of the outside of unenlarged regions of the pipe ends (1,2),
characterised in that
- the socket sections (5,6) receiving the sealing elements (8,9) extend out from the unenlarged regions of the pipe ends (1,2),
- the sealing elements (8,9) each take up the full space defined between the internal contour of the socket sections (5,6) on the one hand and the external contour of the support tube (7) on the other hand,
- the sealing elements (8,9) extend axially up to the end faces of the support tube (7), namely up to the unenlarged regions of the pipe ends (1,2),
- the clamping sleeve (10) has an indentation (12) in its axially central region,
- the internal contours of the clamping sleeve (10) are matched to the external contours of the socket sections (5,6), and
- the socket sections (5,6) which are in axially facing relationship are held axially spaced apart by means of the clamping sleeve (10).

2. Pipe coupling according to claim 1,
characterised in that
- between the external contours of the socket sections (5,6) on the one hand and the internal contours of the clamping sleeve (10) on the other hand there is arranged an intermediate packing layer of rubber or other material, for example an elastomeric material.

## Revendications

1. Raccord pour tuyaux, comprenant deux tronçons de tuyaux (1,2) comportant en bout des parties formant manchons (5,6) dans lesquelles sont insérés des éléments d'étanchéité (8,9), ces parties formant manchons (5,6) s'étendant au-delà d'une zone de plus grand élargissement jusqu'à une zone constituant l'extrémité frontale,
ce raccord comportant une douille de serrage (10) à une ou deux mâchoires, dont le diamètre peut être réduit par action d'une vis, définie et conçue pour venir en prise de manière positive avec les parties formant manchons (5,6) opposées axialement l'une à l'autre,
et comportant également un tube support (7) couvrant la zone de raccord des tronçons de tuyaux et dont le diamètre intérieur correspond pratiquement au diamètre intérieur des zones non élargies des tronçons de tuyaux (1,2),
les parties formant manchons (5,6) s'étendant aux deux extrémités pratiquement jusqu'au niveau radial des faces extérieures de zones non élargies des tronçons de tuyaux (1,2),
caractérisé en ce que
- les parties formant manchons (5,6) qui reçoivent les éléments d'étanchéité (8,9) s'étendent à partir de la zone non élargie des tronçons de tuyaux (1,2),
- les éléments d'étanchéité (8,9) occupent chaque fois la totalité de l'espace limité, d'une part, par le contour intérieur de la partie formant manchon (5,6) et, d'autre part, par le tube support (7),
- les éléments d'étanchéité (8,9) s'étendent axialement jusqu'aux faces frontales du tube support (7), c'est-à-dire jusqu'aux zones non élargies des tronçons de tuyaux (1,2),
- la douille de serrage (10) présente dans sa zone médiane axiale une déformation en moulure (12),
- les contours intérieurs de la douille de serrage (10) sont adaptés aux contours extérieurs des parties formant manchons (5,6) et
- les parties formant manchons (5,6) opposées axialement l'une à l'autre sont maintenues axialement à distance l'une de l'autre par la douille de serrage (10).

2. Raccords pour tuyaux selon la revendication 1, caractérisés en ce que
- une couche intermédiaire de garnissage en caoutchouc ou en une autre matière synthétique, par exemple un matériau élastomère, est placée entre les contours extérieurs des parties formant manchons (5,6), d'une part, et les contours intérieurs de la douille de serrage (10), d'autre part.
